# EUROPÄISCHE PATENTSCHRIFT

(11) **EP 3 034 235 B1**
(45) Veröffentlichungstag und Bekanntmachung des Hinweises auf die Patenterteilung: **22.02.2017**
(21) Anmeldenummer: 15200264.8
(22) Anmeldetag: 15.12.2015
(51) Int. Cl.: B23Q 11/00, B23B 31/00

(54) **SPANABHEBENDE WERKZEUGMASCHINE**
MACHINING MACHINE TOOL
MACHINE-OUTIL À ENLÈVEMENT DE COPEAUX

(30) Priorität: 18.12.2014 DE 102014018696
(43) Veröffentlichungstag der Anmeldung: 22.06.2016
(73) Patentinhaber: JBS System GmbH, 24119 Kronshagen (DE)
(72) Erfinder: Jeß, Maik, 24119 Kronshagen (DE)
(74) Vertreter: Lobemeier, Martin Landolf

(56) Entgegenhaltungen:
- EP-A2- 1 101 564
- DE-C2- 19 722 003
- DE-U1-202011 106 597
- JP-A- S5 627 705
- JP-A- S60 228 053
- JP-A- 2001 150 288
- JP-A- 2012 135 846
- JP-U- H 065 808
- US-A- 4 778 315
- US-B1- 7 931 427

## Beschreibung

Die Erfindung betrifft eine spanabhebende Werkzeugmaschine mit einem Spannfutter, in das das zu bearbeitende Werkstück automatisch eingebracht wird.

Derartige Werkzeugmaschinen sind bekannt. Bei diesen wird das freie Ende des zu bearbeitenden Werkstücks, etwa einer Stange, automatisch in das Spannfutter eingeschoben und sodann von diesem eingespannt.

Bei diesem Vorgang kann nicht ausgeschlossen werden, dass Späne in das Spannwerkzeug geraten, was zu Funktionseinschränkungen des Spannwerkzeugs führen kann. Dieses Problem ist besonders bei Langdrehmaschinen, bei denen das Spanen in unmittelbarer Nähe des Spannwerkzeugs erfolgt, virulent.

Aus dem Stand der Technik sind bereits aus der DE 197 22 003 C2 eine "Werkzeugmaschine mit einer Spülvorrichtung", aus der DE 20 2007 012 625 U1 ein "Reinigungssystem für Oberflächen von Werkzeugaufnahmen für Werkzeuge und Werkzeugmaschinen" und aus der DE 26 32 228 A1 eine "Werkzeugmaschinenspindel mit Luftausblaseeinrichtung" bekannt.

Der Erfindung liegt die Aufgabe zugrunde, eine spanabhebende Werkzeugmaschine zu schaffen, bei der das Eindringen von an dem Werkstück anhaftender Späne vermieden wird.

Erfindungsgemäß wird diese Aufgabe durch die spanabhebende Werkzeugmaschine mit den Merkmalen von Anspruch 1 gelöst. Die Unteransprüche geben vorteilhafte Ausgestaltungen der Erfindung wieder.

Es ist also eine spanabhebende Werkzeugmaschine vorgesehen, mit einer in Richtung des Eindringens des Werkstücks gesehen vor dem Spannfutter angeordneter, das Werkstück umgebenden Einrichtung zum Abspülen von sich an dem von dem Spannfutter aufzunehmenden Werkstück anhaftender Späne, mit einem Fluideinlass, einer Fluidführung und einer Mehrzahl von an deren Umfang angeordneter Fluidaustrittsdüsen, die auf das eingespannte Werkstück gerichtet sind. Das Fluid trifft dabei bevorzugt an einem Ort zwischen dem spanabhebenden Werkzeug, dem Werkstück und dem Spannfutter auf das Werkstück auf.

Bei einer bevorzugten Ausführungsform wird die Einrichtung durch eine das Spannfutter abdeckende, mit einem zylindermantelförmigen Körper, einem zum Ansatz an den Maschinenkörper dienenden Befestigungsflansch und einem Durchlass für das zu bearbeitende Werkstück versehene Schutzkappe gebildet.

Eine erste Düse sollte senkrecht von oben auf das Werkstück gerichtet sein und wenigstens zwei weitere Düsen sollten seitlich von oben auf das Werkstück gerichtet sein. Eine weitere Düse kann senkrecht von unten auf das Werkstück gerichtet sein.

Der Fluideinlass steht mit einem Reservoir in Verbindung und wird bevorzugt mit einem unter Druck stehenden Kühl- und/oder Schmiermittelfluid beschickt.

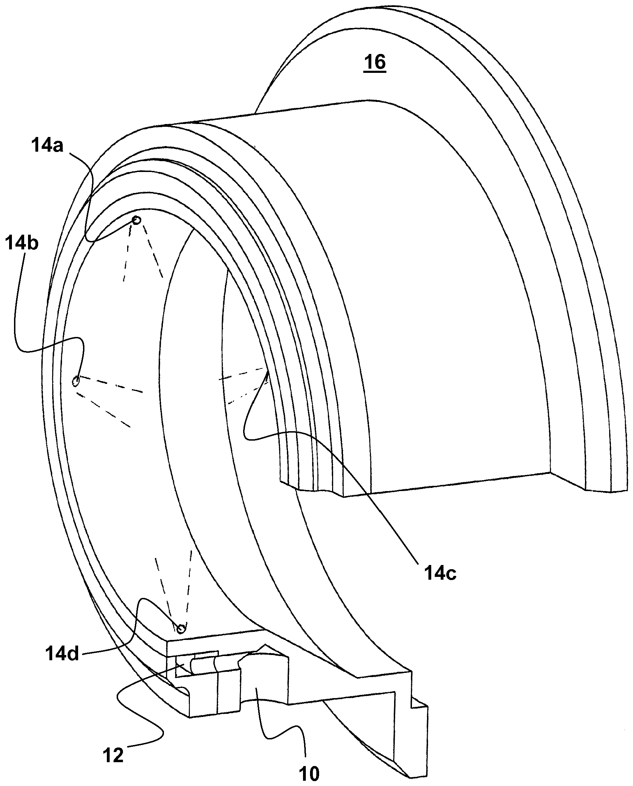

Die Erfindung wird im Folgenden anhand einer Zeichnung erläutert. Dabei zeigt die einzige Fig. 1 ein bevorzugtes Ausführungsbeispiel, bei dem die Einrichtung durch eine das Spannfutter abdeckende Schutzkappe gebildet wird.

Die Schutzkappe besteht aus einem zylindermantelförmigen Körper, einem zum Ansatz an den Maschinenkörper dienenden Befestigungsflansch 16 und einem Durchlass für das zu bearbeitende Werkstück. Die Erfindung kann aber auch etwa durch einen großen Ring gebildet werden, der mit einem eigenen Ständer versehen ist oder aber über einen Arm an dem Schienenkörper befestigt ist.

Die Schutzkappe weist an ihrem in Richtung auf das in das Spannfutter einzubringende Werkstück weisenden Ende einen Fluideinlass 10, eine Fluidführung 12 und eine Mehrzahl von an den Umfang angeordneten Fluidaustrittsdüsen auf. Der Fluideinlass kommuniziert - nicht dargestellt - über Mittel, etwa einen Schlauch, mit einem Vorrat an unter Druck stehendem Kühl- und/Schmiermittelfluid. Von dem Fluideinlass 10 wird das unter Druck stehende Fluid über eine Fluidführung 12, die beispielsweise in der Wandung der Schutzkappe angeordnet sein kann, zu einer Mehrzahl von an dem Umfang der Schutzkappe angeordneten Fluidaustrittsdüsen 14a, 14b, 14c, 14d geführt. Diese Fluidaustrittsdüsen 14a, 14b, 14c, 14d sind gegen die Vorschubrichtung des von dem Spannfutter einzuspannenden Werkstücks, etwa einer Stange auf diese hin gerichtet. Dabei ist bei dem dargestellten Ausführungsbeispiel eine erste Düse senkrecht oberhalb des Werkstücks, weitere Düsen sind seitlich oberhalb des Werkstücks und eine dritte Düse ist senkrecht unterhalb des Werkstücks angeordnet.

Bei Beaufschlagung mit einem Fluid wird jede der Düsen einen Sprühkegel bilden, wie dieser in der Zeichnung mit schematisch durchgestrichelten Linien angedeutet ist. Die obere Düse 14a wird dabei auf der oberen Hälfte des Werkstücks aufliegende Späne abspülen, an den Seiten tritt die Wirkung der seitlichen Düsen 14b, 14c hinzu und die untere Düse 14d verhindert, dass Späne am unteren Teil des Werkstücks haften bleiben.

## Patentansprüche

1. Spanabhebende Werkzeugmaschine mit einem Spannfutter, in das das zu bearbeitende Werkstück automatisch eingebracht wird,
**gekennzeichnet durch**
eine in Richtung des Einbringens des Werkstücks gesehen vor dem Spannfutter angeordnete, das Werkstück ringförmig umgebende Einrichtung zum Abspülen von sich an dem von dem Spannfutter aufzunehmenden Werkstück anhaftender Späne, mit
- einem Fluideinlass (10),
- einer Fluidführung (12) und
- einer Mehrzahl von an deren Umfang angeordneten Fluidaustrittsdüsen (14a, 14b, 14c, 14d), die gegen die Richtung des eingespannten Werkstücks auf dieses hin gerichtet sind.

2. Spanabhebende Werkzeugmaschine nach Anspruch 1, **dadurch gekennzeichnet, dass** die Einrichtung durch eine das Spannfutter abdeckende, mit einem zylindermantelförmigen Körper, einem zum Ansatz an den Maschinenkörper dienenden Befestigungsflansch (16) und einem Durchlass für das zu bearbeitende Werkstück versehene Schutzkappe gebildet wird.

3. Spanabhebende Werkzeugmaschine nach Anspruch 1 oder 2, **dadurch gekennzeichnet, dass** eine erste Düse (14a) senkrecht von oben auf das Werkstück gerichtet ist und wenigstens zwei weitere Düsen (14b, 14c) seitlich von oben auf das Werkstück gerichtet sind.

4. Spanabhebende Werkzeugmaschine nach Anspruch 3, **dadurch gekennzeichnet, dass** eine noch weitere Düse (14d) senkrecht von unten auf das Werkstück gerichtet ist.

5. Spanabhebende Werkzeugmaschine nach einem der vorhergehenden Ansprüche, **dadurch gekennzeichnet, dass** der Fluideinlass (10) mit einem unter Druck stehenden Kühl- und/oder Schmiermittelfluid beschickt wird.

## Claims

1. Chip-removing machine tool with a chuck into which the workpiece to be processed is introduced automatically,
**characterised by**
a device arranged in front of the chuck when viewed in the introduction direction of the workpiece, surrounding the workpiece in a ring shape, for rinsing off the chips adhering to the workpiece to be held by the chuck, with
- a fluid inlet (10),
- a fluid guide (12) and
- a plurality of fluid exit nozzles arranged along its circumference (14a, 14b, 14c, 14d) that are pointed at the clamped workpiece against its direction.

2. Chip-removing machine tool according to claim 1, **characterised in that** the device is formed by a protective cap covering the chuck, applied with a cylinder-jacket-shaped body, an attachment flange (16) intended for attachment to the machine body, and a passage for the workpiece to be processed.

3. Chip-removing machine tool according to claim 1 or 2, **characterised in that** a first nozzle (14a) is pointed at the workpiece vertically from above and at least two other nozzles (14b, 14c) are pointed at the workpiece laterally from above.

4. Chip-removing machine tool according to claim 3, **characterised in that** a further nozzle (14d) is pointed at the workpiece vertically from below.

5. Chip-removing machine tool according to one of the preceding claims, **characterised in that** the fluid inlet (10) is supplied with pressurised cooling and/or lubrication fluid.

## Revendications

1. Machine-outil pour le retrait des copeaux, dotée d'un mandrin dans lequel la pièce à usiner est automatiquement insérée,
**caractérisée par**
un dispositif qui, dans le sens de l'insertion de la pièce à usiner, est situé face au mandrin et entoure la pièce à usiner, et permet de rincer, depuis elle, les copeaux adhérant à la pièce qui doit être accueillie par le mandrin, avec une
- entrée pour les fluides (10),
- une conduite de guidage pour les fluides (12) et
- une multitude de buses de sortie du fluide (14a, 14b, 14c, 14d), situées sur son périmètre, et qui sont orientées dans la direction de la pièce serrée.

2. Machine-outil pour le retrait des copeaux selon la revendication 1, **caractérisée en ce que** le dispositif est formé par un capot de protection prévu pour la pièce à usiner, couvrant le mandrin avec un corps à forme de manteau de cylindre, une bride de fixation (16) pour la fixation sur le corps de la machine, et un passage pour la pièce à usiner.

3. Machine-outil pour le retrait des copeaux selon la revendication 1 ou 2, **caractérisée en ce que** une première tuyère (14a) est orientée verticalement du haut vers la pièce à usiner, et au moins deux autres tuyères (14b, 14c) sont orientées vers la pièce à usiner latéralement depuis le haut.

4. Machine-outil pour le retrait des copeaux selon la revendication 3, **caractérisée en ce que** une autre tuyère (14d) est orientée verticalement depuis le bas vers la pièce à usiner.

5. Machine-outil pour le retrait des copeaux selon une des revendications susmentionnées, **caractérisée en ce que** l'entrée pour les fluides (10) est alimentée par un fluide de refroidissement et/ou lubrifiant sous pression.
